# EUROPEAN PATENT APPLICATION

(11) **EP 2 762 287 A1**
(43) Date of publication of application: **06.08.2014**
(21) Application number: 13153937.1
(22) Date of filing: 04.02.2013
(51) Int. Cl.: B29B 17/02

(54) **Apparatus and method for recycling bituminous material bodies by melting**

(71) Applicant: Pochert, Jan-Niels, 14109 Berlin (DE); Appels, Daniel, 3906 Saas Fee (CH)
(72) Inventor: Pochert, Jan-Niels, 14109 Berlin (DE); Appels, Daniel, 3906 Saas Fee (CH)
(74) Representative: Eisenführ Speiser

(57) **Abstract**

The invention shows an apparatus for recycling bituminous material bodies by melting, in particular for recycling bituminous composite material bodies comprising a composite material and a bituminous material, in particular roofing materials, in particular in the form of bituminous covering layers of roofing sheets, the apparatus comprising:
- a vessel having a vessel wall surrounding an interior space of the vessel extending along a vertical axis of the vessel for receiving the bituminous material bodies,
- a bottom plate and a compression plate extending transverse to the vertical axis wherein at least the compression plate has a number of through flow orifices adapted to allow a through flow of molten bituminous material, wherein the plates are movable along the vertical axis such that
- in a first operating state the compression plate is in a middle position for forming a melting space of larger size between the compression plate and the bottom plate for melting bituminous material in the melting space wherein the bottom plate is in a melting position,
- in a second operating state the compression plate is in a lower position for forming a compression space of minor size between the compression plate and the bottom plate for compressing solid residues and/or solid composite material in the compression space, and wherein
molten bituminous material is retained in a storing space above the compression plate for storing and/or discharging bituminous material, wherein the bottom plate is in a compression position, wherein
- the compression plate is movable from the middle position to the lower position with a downward velocity below an upper limit, wherein
the upper limit of the downward velocity and the through flow orifices are in a form adapted to
- retain the composite material and/or other solid residues below the compression plate in a state of operation when moving the compression plate from the middle position to the lower position with the downward velocity, such that
- a passive filter means below the compression plate is provided by means of the composite material and/or other solid residues.

## Description

### Background of the invention

The present invention relates to an apparatus and a method for recycling bituminous material bodies by melting. In particular, the present invention relates to an apparatus and method for recycling bituminous composite material bodies comprising a composite material and a bituminous material. In particular, the apparatus and method are adapted for recycling roofing materials, in particular in the form of bituminous covering layers of roofing sheets.

The bituminous material bodies mentioned above for recycling usually have additional to a bituminous layer also possibly non-bituminous layers like a mineral covering layer or a bitumen reinforcement layer. Such bituminous material bodies, in particular roofing sheets or the like, are known from the prior art and are used in particular to cover and seal flat roofs e.g.. For instance a bituminous layer can be provided as a conventional bitumen layer or as a polymer modified bitumen layer. The bitumen can in principle be oxidized or can be distilled bitumen. The reinforcement layer or other composite material can be a polyester fleece, fiberglass mat, fiberglass fabric or felt core.

After reaching the end of their service life, the roof sheets or other bituminous material bodies are usually processed for energy recovery, i.e. they are burnt as a substitute fuel in coal fire power stations. This kind of recycling causes considerable CO₂ emissions and does not constitute full recycling of the roof sheets in the real sense aiming to a full material recycling.

Varieties of distillation bitumen and oxidized bitumen are basically in primary use nowadays to provide a bituminous layer in a bituminous material body. Bitumen as such is obtained by distilling crude oil. It consists of a mixture of different hydrocarbons and on account of its properties as one of the most used sealants in the construction industry. Distillation bitumen or refined bitumen usually refers to residual oil that remains after fractional distillation at reduced pressure and a temperature of approximately 350°C. These soft to medium-hard bitumen varieties are primarily used in road construction. Distillation bitumen may also refer to a high vacuum bitumen, which is obtained by further processing or further distillation of distillation bitumen under a vacuum. High vacuum bitumens, i.e. a special form of distillation bitumen, are mostly used for asphalt, floors, streets and rubber goods, due to their hardness and can also be used as distillation bitumens for a bituminous layer in a bituminous material body. Oxidized or blown bitumens are obtained by blowing air into distillation bitumen air at a temperature of approximately 250°C. Depending on this specific process used, it is possible to give the bitumen in roof specific properties in respect of resistance, to heat or cold.

On the other hand it has been found that hot processing and/or recycling of bituminous material bodies in principle can be achieved by melting the bituminous material bodies. However, a problem arises due to different melting or softening or transition points of temperature of the bituminous material in the bituminous material bodies on the one hand and the composite material in the material bodies or other residues on the other hand; usually the composite material and other residues can also comprise e.g. solid dirt, slate chippings and the like and these kind of composite material and other residues may remain solid when the bituminous material is already in a melted state.

In the prior art several attempts and suggestions have been made to handle bituminous material bodies for recycling by melting in an apparatus and a method; one of which is described for instance in WO 98/31519-A. As described therein the bituminous material bodies are heated such that the bituminous material melts. After that the bitumen and the other components forming the roofing materials are separated from each other. After sorting, reducing and melting, the material is sieved and sorted. This requires a comparable high amount of energy and is rather cumbrous.

Further in EP 11 44 171 B1 a method and apparatus has been described wherein the bitumen component of the bituminous material bodies --herein also referred to as the bituminous material-- is melted in a vessel and separated from other non-melting components --herein also referred to as a composite material-- of the bituminous material bodies. This is established by means of pressing or pushing together those non-melting components of composite material and all other residues in the vessel. The disclosure of the aforementioned patent EP 11 44 171 B1 herewith is incorporated in its entirety by reference into this application.

The basic principal of separating a bituminous material in the melted state from a composite material of a bituminous material body to be recycled as such has been found to be a good approach; however, still it remains to simplified and the apparatus and the method approach advantageously should be more efficiently to be handled. In particular the amount of energy and the separation process as such needs to be further improved.

EP 11 44 171 B1 provides a press means formed by a plate which is movable in the vessel over the bottom in the direction of a wall of the vessel which plate fits in cross section vertically in the vessel. Further NL 1031868 describes an alternative approach wherein such plate is movable in the vessel in the vertical direction of a wall of the vessel wherein the plate fits in a cross section horizontal in the vessel. To prevent clogging of through flow orifices in the plate, the through flow orifices of the plate need to have a conical shape. Also this design can be improved insignificantly.

### Summary of the invention

These and other aspects are addressed by the invention, the object of which is to specify a method and apparatus for recycling bituminous bodies by melting, which are further improved in view of the above mentioned problems. At least one of the aspects addressed above shall be addressed by the invention. At least the object of the invention is to provide a method and apparatus with an alternative approach.

In the particular preferred aspect the object of the invention is to improve a separation of the composite material and the bituminous material of a recyclable bituminous material body. In particular the separation process shall be achievable in a more efficient way. In particular it is an object to improve the quality of the recycled bituminous material at the end of recycling the bituminous material bodies by melting. In particular retaining of composite material and other solid residues during the separation process shall be more effective and/or provided with higher reliability. In particular an apparatus for recycling still should be construed in a less complicated but nevertheless efficient way; in particular the production of the apparatus shall be more simplified as compared to the prior art.

The object with regard to the apparatus is achieved by the invention with the subject-matter of claim 1.

The object with regard to the method is achieved by the invention with the subject-matter of method claim 18.

The invention starts from the consideration, that active filter means as described with a method and apparatus for recycling bituminous material bodies of the prior art have some disadvantages with regard to efficiency and quality of the recycling process, but also with regard to handling of the method and apparatus itself. A significant advantage of the passive filter means provided by means of the composite material and/or solid residues below the compression plate is that further effort for maintenance or handling of the passive filter means is omitted. Even more the passive filter means turns out to be very efficient and effective for filtering the melted bituminous material. Indeed, it has been shown that the passive filter means is adapted to provide a high quality primary bituminous material from the recycling process. The reason is, that the solid composite material and/or other solid residues of the bituminous material bodies to be recycled as a matter of fact form a specifically advantageous filter process for the bituminous material; it turns out, that by gathering and pressing of the bituminous material bodies to be recycled and the composite material provided therein a passive filter means is formed once the composite material and/or other solid residues are dissolved in the melted bituminous material; i.e. basically upon heating the bituminous material bodies above the softening-temperature and/or melting temperature during the movement of the compression plate from the middle position to the lower position.

The concept of the invention recognized, that on the one hand the through flow orifices in the compression plate can be designed in form and size such that on the one hand a composite material and/other solid residues are retained effectively below the compression plate to form a passive filter means. In particular this leads to a particular preferred upper limit of the width of orifice. This is because as once the width of orifice exceeds such upper limit the composite material and/or other solid residues will not be restrained below the compression plate once the majority thereof tends to pass through an oversized through flow orifice with the melted bituminous material. On the other hand it turns out that a lower limit of the widths of through flow orifices in a compression plate is provided advantageously. The reason is, as once a through flow orifice width becomes too small the orifice will be clogged by means of non-melting material like composite material and/or other solid residues. In such case melted bituminous material will not be restricted to flow through the through flow orifices and thus the separation process is slowed down or even has to be stopped when moving the compression plate form the middle position to the lower position.

In particular it turns out, that the downward velocity for moving the compression plate from the middle position to the lower position is to provide it with an upper limit in combination with the margin of through flow orifices between a lower limit and an upper limit as described above to provide for the advantageous passive filter means. Namely in case of a downward velocity below an upper limit and a through flow orifice between the margins of a lower limit width and an upper limit width of through flow orifices an optimized passive filter means is provided below the compression plate whereas still filtering and separation process of the melted bituminous material is efficiently executed upon movement of the compression plate from the middle position to the lower position.

Still also it turns out, that making the through flow orifices of sufficiently width, advantages are provided upon melting the bituminous material; namely once the through flow orifices are sufficiently wide a circulation of melting bituminous material in the first operating state of the apparatus is affordable in an advantageous region; this supports efficient heating of the bituminous material bodies and lowers energy supply for heating.

In particular it turned out that the concept of the invention will recognize the filter functionality of the press cake built up upon movement of the compression plate from the middle position to the lower position. In particular the invention astonishingly found that polyester fleece, glass fleece or other composite material or composite residue behave during the recycling process as described like a filter material when the apparatus and method approaches from the first operating state to the second operating state as claimed. Several experiments and expertise have shown that once the downward velocity is sufficiently low --in particular below an upper limit-- filler materials or the like composite material or solid residue, in particular also large molecular weight fractions of the bitumen like SBS and ABB (polyester, polymer and caoutchouc and alike modified bitumen), can tend in the press cake to built up a passive filter means which functions on large molecular scale.

It has been found that a particular pure primary bituminous material is separated above the compression plate during the recycling process and in the recycling apparatus claimed; namely a primary bitumen basically free --in the prescribed margins and quality definitions-- from filler material or the like composite material or other residues and in particular advantageously also free of polymer additions or the like (in particular due to gathering of SBS and ABB in the filter cake).

It turns out that once the margins of the process and apparatus are adapted as described, the press cake dynamically evolves to provide micro channels of sufficiently small size and these are adapted to retain filler material of large molecular scale and polymer addition like SBS and ABB. Thus, whereas polymer and other large molecular weight additions are retained in the micro channels still the bituminous material finds other channels in the filter cake and through the through flow orifices in the compression plate and thus is efficiently separated above the compression plate as a particular pure primary bitumen.

In a particular preferred development the invention provides for an upper limit of the downward velocity of below 15 cm/min, in particular of below 10 cm/min and the downward velocity is above 0 cm/min. In a further preferred development the concept of the invention leads to the through flow orifices in form of slits. In particular the slits have a lower slit width and an upper slit length. Astonishingly it turns out that the concept of the invention works well already once the through flow orifices have a lower width to retain composite or other filler material and/or solid residues according to the concept.

In a particular preferred development the through flow orifices lower cross section or dimension, in particular lower width thereof like lower slit width or the like, is below 10 mm, in particular below 4 mm, in particular below 2 mm.

Independently, in particular alternatively are additionally, a further development provided for a ratio of a sum of open cross sections of through flow orifices to the total closed area of the compression plate; the ratio turns out to be advantageously below 10 %, in particular below 5 %. In a particular preferred embodiment the ratio is below 2 %, in particular below 1 %, in particular above 0.001 % or above 0.01 %, in particular above 0.1 %.

In a further particular preferred development the orifices in the compression plate have plan-parallel boundary surfaces. This has advantages in the through flow dynamics of the molten bituminous material and also in the processing of the compression plate.

In essence the concept of the invention provides for an apparatus and a method adapted for recycling bituminous material bodies by melting, wherein a lowering velocity of the compression plate is sufficiently small, in particular in combination with the size of the through flow orifices in the compression plate, such that a inventive passive filter means is provided below the compression plate for filtering the recyclable bituminous material in a melted state to provide a particular high quality primary bitumen, even without polyester or other polymer material residues.

Further developments of the invention are outlined in the dependent claims. Thereby the mentioned advantages of the proposed concept are even more improved.

It turns out, that the concept of the invention is particular effective in a development wherein the vessel has an interior volume of between 5 m³ to 12 m³, in particular wherein a cross section of compression plate is between 2 m and 4 m. A particular preferred height of vessel can be between 1 m and 5 m.

Advantageously it turns out that the apparatus and method claimed is adapted to the use for separation of tar and bitumen. Due to the vertical axis arrangement of the vessel due to the different density of tar and bitumen (1,2 g/cm³ and 1,0 g/cm³ respectively), a hot mixture of tar and bitumen will separate once the mixture is at rest. Heavy tar fractions gather at the bottom of the vessel whereas lighter bitumen fractions gather above the tar fractions. Thus the fractions (the bitumen) can be drawn off from the vessel, in particular after having lowered the compression plate. In particular, additionally or alternatively, the fractions (the tar fractions from below regions of the vessel) can be drawn off from the vessel before the lowering of the compression plate.

Further preferred developments are of particular advantage for improving apparatus construction and handling of the apparatus and energy efficiency of the heating process can be derived from the further dependent claims and the drawing.

Preferably a hydraulic and/or pneumatic drive is adapted to move at least the compression plate along the vertical axis from the middle position to the lower position with the downward velocity.

Preferably a drive is adapted to move at least the compression plate along the vertical axis by exerting pressure at least to a first number of drive rods adapted to move the compression plate between said positions.

Preferably a second number of guidance rods are adapted to establish a guidance link at least of the bottom plate to the compression plate wherein
- a lower distance between the bottom plate and the compression plate is variable dependent on the position of the compression plate, and
- an upper distance between the bottom plate and the compression plate is limited by a stop collar.

Preferably a drive rod extends to a first line of openings in said plates and a guidance rod extends to a second line of openings in said plates.

Preferably a first line of openings in said plates is located on an outer circumference line on a respective plate and a second line of openings in said plates is located on an inner circumference line on a respective plate.

Preferably the number of drive rods and the number of guidance rods and respective openings are the same, in particular the number amounts to three, in particular each rod is arranged along a first and second inner circumferential cylindrical shape.

Preferably further comprising a cover plate wherein the compression plate is arranged between the bottom plate and the cover plate.

Preferably when the bottom plate is in a melting position, the bottom plate in a lowermost region of the vessel wall along the vertical axis and the vessel is closed by the cover plate and the compression plate is in an upper region of the vessel wall along the vertical axis.

Preferably when the bottom plate is in a compression position, the bottom plate in a lowermost region of the vessel wall along the vertical axis and the vessel is closed by the cover plate and the compression plate is in a lower region of the vessel wall along the vertical axis.

Preferably when the bottom plate is in a discharge position, the vessel is open and the compression plate and the cover plate are in a region above the vessel wall along the vertical axis, in particular the bottom plate in the region above the vessel wall along the vertical axis.

Preferably the interior space is adapted for receiving the bituminous materials, wherein the vessel wall has an inner wall defining the interior space and adapted for contacting the bituminous materials, and an outer wall defining an annular space between the inner wall and the outer wall, which annular space is adapted to receive a heating liquid for heating the interior space, in particular the bituminous materials.

Preferably the inner wall and the out wall are connected at a plurality of hubs, in particular each hub is formed as pillow plated hub, in particular of a weld hub.

Preferably the interior space is adapted to be open to the surrounding, in particular an overflow channel is connectable in a flow connection to the interior space.

Preferably the interior space is adapted to be pressurized with a pressure below atmospheric pressure, in particular with a vacuum pressure.

Preferably further comprising a microwave heating arrangement is adapted to heat the interior space, in particular the bituminous materials.

Preferably the apparatus further comprises: a first and second flow pipe connected to the vessel in a flow connection to the interior space of the vessel wherein a propeller is adapted to circulate molten bituminous materials in the first and second flow pipe and the interior space of the vessel.

Preferably in a third operating state the compression plate is in an upper position for forming a discharge space between the compression plate and the bottom plate for discharging bituminous materials from the discharge space, wherein the bottom plate is in a discharge position

Preferably the discharge position of the bottom plate is adapted such that the bottom plate surface aligns with a slider element of a slide and/or a discharge receipt tray, wherein the slide is adapted to move the slider element along the surface of the bottom plate to move the compressed solid residues and/or composite material to the discharge receipt tray.

Preferably the discharge receipt tray is heatable and/or pivotable; in particular pivotable from a horizontal surface position to a vertical surface position to release the compressed solid residues and/or composite material.

Preferably a head frame is adapted for supporting the vessel and/or a slide and/or a tray wherein a vessel part of the a head frame comprises a number of columns extending a along an outer circumferential cylindrical shape, in particular wherein a column is basically aligned in a radial extending vertical tier with a guidance rod and a drive rod.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

The drawing shows in:
- Fig. 1:: a perspective view of a preferred embodiment of an apparatus for recycling bituminous material bodies by melting;
- Fig. 2:: a perspective view of a vessel of the apparatus of Fig. 1;
- Fig. 3:: a sketch of different preferred operating states of a plate arrangement of the apparatus of Fig. 1;
- Fig. 4:: a perspective view of a compression plate of the plate arrangement of the apparatus of Fig. 1;
- Fig. 5:: a flow chart of a preferred embodiment of a method for recycling bituminous material bodies by melting.

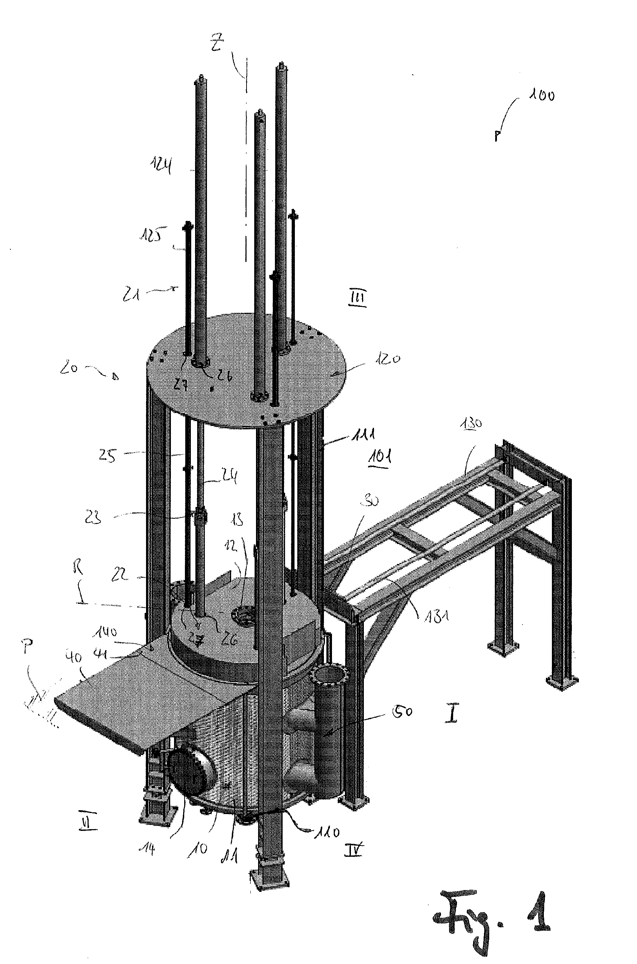

Fig. 1 shows a perspective view of an apparatus 100 for recycling bituminous material bodies (not shown) by melting. Such bituminous material bodies in particular can be in the form of bituminous composite material bodies comprising a composite material and a bituminous material. For instance roofing materials, in particular in the form of bituminous covering layers of roofing sheets as described in the introduction are suitable for recycling by melting with considerable advantages as compared to prior art practice of burning the bituminous material bodies. The recycling apparatus 100 is construed with a head frame 101 having a vessel part frame 110, a drive part frame 120, a slide part frame 130 and a tray part frame 140 to support respective parts of the recycling apparatus 100. Therein said parts basically comprise but are not limited to a vessel 10, a slider element 30 and a tray 40 and a drive with a plate arrangement 20 wherein the drive 21 and the plate arrangement 22 and a drive-plate linkage 23 are referenced separately.

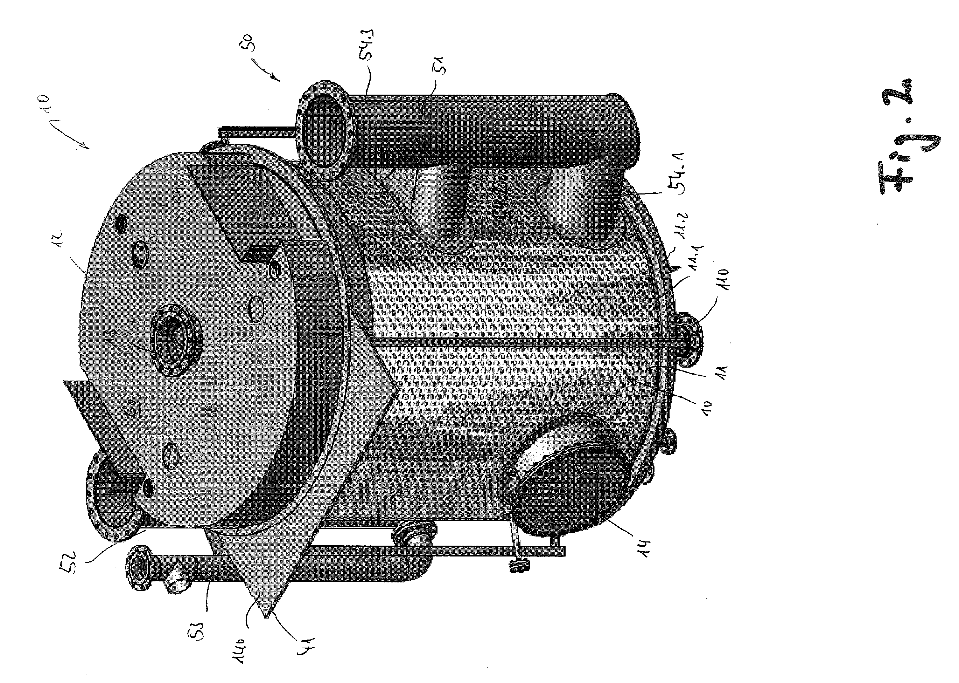

The vessel 10 as such is described in detail with regard to Fig.2. As already visible in Fig.1 the vessel 10 has a vessel wall surrounding an interior space (not shown) wherein the vessel itself extends along a vertical axis Z adapted to receive the bituminous bodies from the top along the direction of the vertical axis Z.

At least some of the plates of the plate arrangement 22 described below from a vessel lid 12. A first pipe nozzle 13 in the vessel lid 12 is adapted but not limited to draw off an upper and/or light fraction of melt from the interior space of the vessel 10. On the side of the vessel a side pipe nozzle 14 in the vessel wall 11 is adapted but not limited to draw off a lower, heavier weight fraction of melt from the interior space of the vessel 10. The upper pipe nozzle 13 thus for instance can be used to draw off a bitumen fraction of melt and the side pipe nozzle 14 can be used to draw off a tar fraction of the melt in the vessel.

The linkage 23 comprises a number of three drive rods 24 and a number of three guidance rods 25 where in each of the rods 24, 25 extend along the vertical axis Z partly to and partly through a first line of openings 26 and a second line of openings 25 in the vessel lid 12 as explained further in detail in the following. The first line of openings 26 is located on an inner circumference line on the vessel lid 12 and the second line of opening 27 is located on an outer circumference line in the vessel lid 12. The inner circumference line 28 and the outer circumference line 29 respectively is shown in Fig.2 on the vessel lid. Further the vessel part 110 of the head frame 101 comprises a number of columns 111 extending along a very outer circumference cylindrical shape. Each of the columns 111 is basically aligned in a vertical tier along a radial extension R together with the guidance rod 25 and the drive rod 24. Assigned to the drive rods 24 is a drive cylinder 124 and to each of the guidance rods is assigned a further drive cylinder 125. As such the drive cylinders 124, 125 form a hydraulic drive 21 which is situated and supported by the drive part frame 120 as shown in Fig.1. Upon movement of the drive 21 the linkage makes the vessel lid 12 to move up or down and as described further in detail in particular with reference to the specific plates of the vessel lid 12 and/or the bottom plate in the vessel 10.

Further as shown in Fig.1 the slider element 30 is adapted to be movable on or by rail bars 131 supported by the frame slide part 130. Thus a slide element 30 can be moved from the one side I of the recycling apparatus 100 to and further approaching on the opening cross section of the vessel 10, i.e. right above the vessel wall 11 in the horizontal plane P which also aligns with the plane of a tray 40 at the tray part frame 140. Thus the slide element 30 by support of the frame slide part 130 is adapted to move elevated compressed material in the plane P from a vessel's opening to the tray 40. The tray 40 itself is heated and thus keeps the compressed material (not shown) in a soft state. Once the compressed material is ready for discharging into a container or the like, the tray 40 is fold down by pivoting the tray 40 along a hinge 41 such that the discharge mass of compressed materials falls of the tray 40 into a container beneath the tray (not shown). Also a tar fraction or other residual fraction in the lower region of the vessel can be drawn off from the pipe nozzle 14 by discharging into a container or a reservoir or discharge piping or the like.

In an alternative slightly varied embodiment the upper pipe nozzle 13 can be used to exert a vacuum pressure to the vessel which as such is useful to decrease a melting point of materials; thus this reduces the amount of heat input from melting bituminous material bodies in the interior space of the vessel 10. Thus recycling of the bituminous material bodies can be proceeded at considerably lower temperatures than at atmospheric pressure. Also in a varied embodiment the upper pipe nozzle 13 can be used as an overflow discharge opening which allows to discharge overflowed mass of bituminous material or other melted material which may occur when erroneously the vessel 10 is overloaded or otherwise an exert of pressure on melted material arises in the vessel 10. Thus unless for saving energy the vessel system 10 shown in Fig.1 as part of the recycling apparatus 100 is construed as an open system which as such lowers the danger of over pressure or detonation, even at high temperatures and development of flammable gases upon heating of the bituminous material. Of course, also in a varied embodiment the upper pipe nozzle 13 can be used to discharge toxic gases or other gases and/or steam or the like from the interior space of the vessel 10 when heating the bituminous material bodies.

The tray frame 140 is located on the other side II of the recycling apparatus 100. The drive frame 120 is located on the upper part III of the recycling apparatus 100. The vessel frame part 110 is located at the lower side IV of the recycling apparatus 100.

In the following for identical or similar features of identical or similar function the same reference marks are used for simplicity. Thus as regards the description of the vessel in Fig.2 it is partly already hinted at the description with regard to Fig.1.

Further in Fig.2 an overflow piping 53 is shown which is adapted additionally or alternative to the upper pipe nozzle 13 to discharge gaseous components or overflow melted components from the interior space of the vessel 10. Connected to the wall 11 and in through flow connection 54.1, 54.2 to the interior of the vessel is a first and second flow pipe 51.52 as a part of a circulation piping 50 wherein the circulation piping 50 is adapted to circulate molten bituminous materials in the first and second flow pipe 51, 52 and the interior space of the vessel 10, once the bituminous material bodies are melted in the interior space of vessel 10. Thereby the amount of heat energy transferred to the interior space of the vessel 10 and thus to the bituminous material bodies is effectively circulated and distributed which considerably lowers the amount of time for melting the bituminous material bodies.

Heat is transferred to the interior space of the vessel 10 alone or in addition, in particular auxiliary, by a microwave unit which is not shown in detail in Fig.2.

The biggest amount of heat energy, however in general, is transferred to the interior space of the vessel 10 as provided by construing the vessel's wall 11 as a double wall namely with an inner wall 11.2 and an outer wall 11.1. The construction is such that the annular space defined between the inner and outer wall 11.2, 11.1 is adapted to receive a heated liquid, in particular heat oil or thermal oil or the like liquid medium such that the heat energy of the liquid heat medium is transferred by contact of heat through the inner wall 11.2 to the bituminous material bodies in the interior space of the vessel. As can be seen from the graphics of the outer wall 11.1 at the wall 11 of the vessel 10 the connection of the inner and outer wall 11.2, 11.1 is provided by means of pillow plated laser welding; this results in the pillow form of a hub kind of surface of the outer wall 11.1. Thereby a radial distance of perhaps 3 cm or the like are in particular useful to lower spacing of the inner and outer wall, in particular down to 5 or 3 mm or in a range between 2mm and 5cm for instance can be provided. The inner and outer wall 11.2, 11.1 are connected at the margins of a pillow by weld connection whereas beyond the weld connection points a through flow of heating liquid is possible throughout the annular space between the inner and outer wall 11.2, 11.1. Thus a homogenous heating of the interior space around the circumference and along the cylindrical shape in vertical axis Z extension is provided. This allows for a continuous and smooth and even heating of the bituminous material bodies in the interior space of the vessel 10.

The bituminous melted material in the vessel and the circulation piping arrangement 50 is directed into the interior space at a lower pipe connection 54.1 of the circulation piping arrangement 50 and out of the interior space at an upper pipe connection 54.2 of the circulation piping arrangement 50. Further circulation piping nozzles 54.3 can be used to draw off part of the melted material and/or to degas, ventilate or depressurize the interior space of the vessel 10.

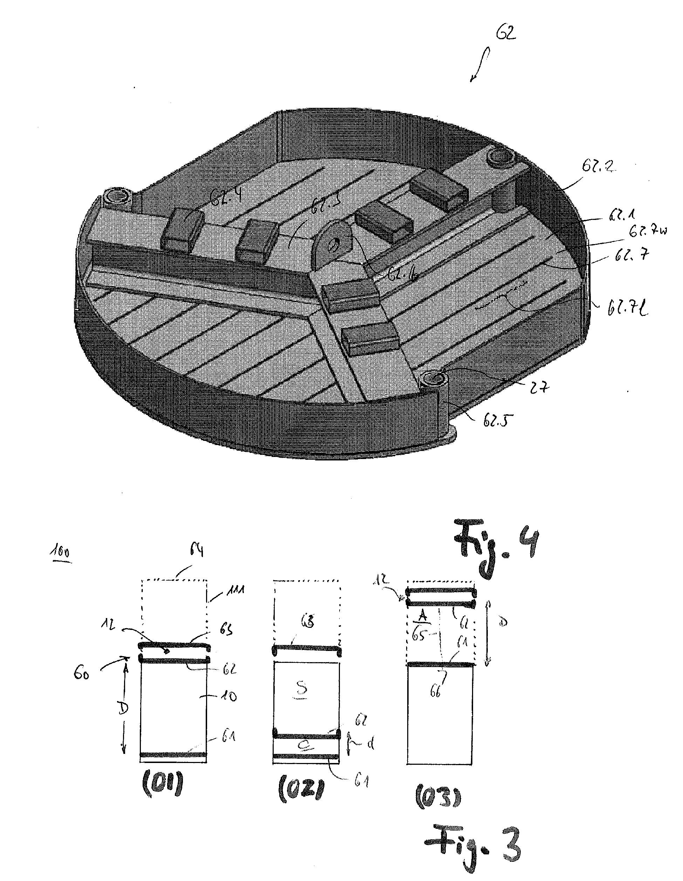

Fig.2 shows the vessel 10 with the lid 12 in an arrangement of plates as further described and symbolized in Fig.4.

The plate arrangement 60 assigned to the vessel 10 and the linkage 23 of the drive 21 is shown in Fig.3 in a first operating state 01, a second operating state 02 and a third operating state 03. The plate arrangement comprises a bottom plate 61, a compression plate 62, and a cover plate 63. The schematic view of Fig.3 shows the operating states 01, 02, 03 of the recycling apparatus 100 with the vessel 10 and the drive part frame 120 providing the number of columns 111 and a drive 20 platform plate 64. As indicated in Fig.1 the lid 11 is construed as a plan-parallel connection of the cover plate 63 and the compression plate 62 wherein the compression plate 62 is inserted into a cavity of the cover plate 63. Thus basically the plates 61, 62, 63, 64 are part of a coaxial aligned plate arrangement 60 wherein the bottom, compression and cover plates 61, 62, 63 are movable along the vertical axis Z and the platform plate 64 as part of the frame 120 is adapted to stabilize the linkage 23 and drive 21. All of the plates comprise the above mentioned openings 26, 27 to throughput the linkage and/or drive 23, 21, in particular the rods 24, 25 as guidance and drive rods for moving the plates 61, 62, 63.

Further as it is clear from Fig.3 the cover plate 63 and the compression plate 62 are movable by the drive 21 independently from each other. However, the bottom plate 61 is linked to the compressing plate 62 such that the bottom plate 61 is pulled in a fixed connection distance D of large size in the third operation state 03 at least; here also in the first operation state 01. Therefore, in an upper state the distance D between the bottom plate 61 and the compression plate 62 is limited by a stop collar at the linkage beneath the bottom plate. Thus, once the compression plate has moved up to a certain distance D (upper distance) the bottom plate 61 has to follow the movement of the compression plates 62 due to a fixed linking rod of the linkage 23 between compression plate 62 and bottom plate 61. In Fig.3 operation state 03 the linkage 23 with drive and guidance rod 24, 25 is symbolized as the linkage extension 65 with collar 66.

In the first operating state 01 the compression plate 62 is in the middle position for forming a melting space of larger size D between the compression plate 62 and the bottom plate 61 for melting bituminous material in the melting space wherein the bottom plate 61 is in the melting position.

In the second operation state 02 the compression plate 62 is in a lower position for forming a compression space of minor size d between the compression plate 62 and the bottom plate 61 for compressing solid residuals and/or composite material and other filler material in the compressing space.

The melted bituminous material is retained in a storing space S above the compression plate 62 for storing and/or discharging melting bituminous material, wherein the bottom plate 61 is in a compression position for providing the compression space C between the bottom plate 61 and the compression plate 62. The cover plate 63 in both operating states 01, 02 closes the vessel 10 and thus toxic or other gases or the like outgas is vented regularly to one or more of the options of a pipe nozzle 13 or circulating pipe arrangement 50 as described above.

In a third operating state 03 the compression plate is in an upper position for forming a discharge space between the compression plate 62 and the bottom plate 61 for discharging bituminous materials from the discharge space A as shown in Fig.3 for operating state 03. The bottom plate then is in the so called discharge position in plane P as shown in Fig.1.

The compression plate in a particular preferred construction is shown in Fig.4. The compression plate 62 has a border frame 62.2 surrounding the plate 62.1 itself along the full diameter. The plate 62.1 itself is stabilized by a three axis bar arrangement 62.3 and connection elements 62.4 define a preferred distance to the cover plate 63. Further in the surrounding border 62.2 a through hole 62.5 is implemented to form openings for the guidance rods 25 as indicated by reference sign 27 in Fig.1. Further on the three axis bar arrangement 62.3 pf the plate 62 a joint tap 62.6 is provided with a hole such that the hole on the tap 62.6 can be reached through the piping nozzle 13 of the lid 12 as shown in Fig.1.

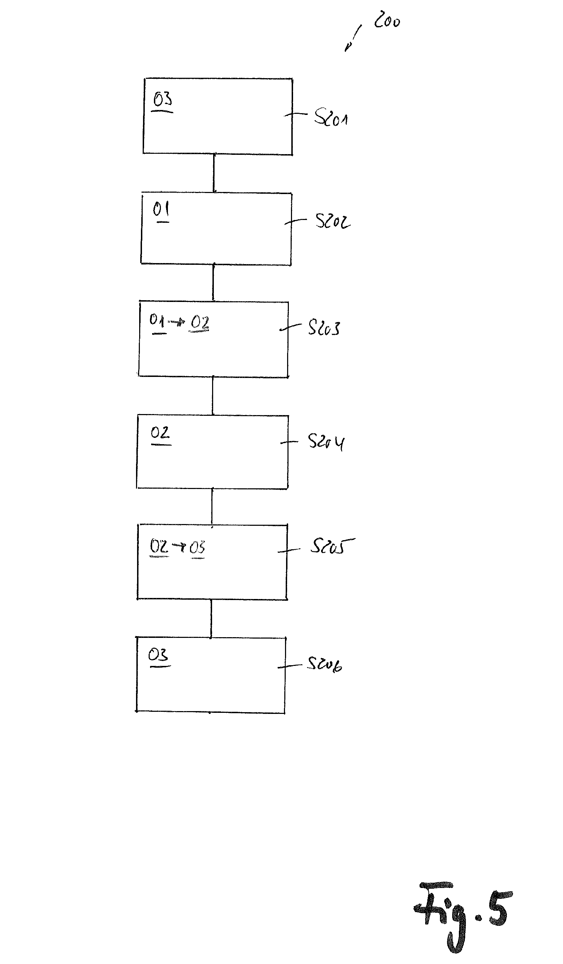

Fig. 5 shows a flow chart of a method for recycling bituminous material bodies by melting in principle. The method can be executed by means of the recycling apparatus 100 as described in detail in Fig.1 to Fig.4.

In the method 200 in step S201 the recycling apparatus 100 provides the plate arrangement 60 in a third operating state 03 wherein a large space of large size D is provided to introduce bituminous material bodies like bituminous composite material bodies comprising a composite material and a bituminous material in solid form for recycling on the bottom plate 61. In the method step S202, the plate arrangement 60 is moved to operating state 01; thus the vessel 10 is closed by the lid 12 and the bituminous material bodies can be heated and once in the melted state can be circulated in the vessel and the circulation tube arrangement 50.

In step S203 the plate arrangement 60 is moved to the operating state 02 wherein the composite material is separated from the bituminous material by means of the compression plate 62 moving from the middle position of operating state 01 to the lower position of operating state 02. Thereby the solid non-melted material is compressed in the compression space C between the bottom plate 61 and the compression plate 62. Further upon accumulation of filler material below the compression plate 62 melted bituminous material before being forced through the orifices of the compression plate 62 is filtered in a partly built up press cake below the compression plate 62. Thereby a very effective passive filter means is provided such that in the storing space S above the compression plate 62 high quality and pure primary bitumen is retained apart from the compression cake in the compression space C. In a further step S204 the melted and purified primary bitumen in storage space S is drawn off from the storage space between compression plate 62 and cover plate 63. This can be achieved by means of the upper pipe nozzle 13 or additionally or alternatively by means of the side pipe nozzle 14 as described with Fig.2.

The perforated plate 62.1 as shown in Fig.4 of the compression plate 62 in this embodiment has through flow orifices 62.7 in the form of slits having a slower slit width and an upper slit length. The lower slit width 62.7 W is below 2 mm. The ratio of some of open cross sections of orifices in form of the slits 62.7 to the total closed area of the plate 62.1 of the compression plate 62 is in this embodiment well below 2 % but above 0,001 %. The side walls of the slits 62.7 in this embodiment are plan-parallel. It has been shown that perforations of plan-parallel side walls are easier to manufacture and well function within the filter function of the passive filter means as described above.

However, in a varied embodiment, the side walls can also be provided in a conus-like form as has been described in NL 1031868. The NL 1031868 herewith is incorporated by reference in its entirety into this application.

According to the concept of the invention it has been shown that the passive filter means is provided in a particular preferred form when the downward velocity of the compression plate from moving between the middle position of operating state 01 to the lower position of the operating state 02 is well below 15 cm/min., in particular well below 10 cm/min. In this embodiment a downward velocity is variable in the range between 1 cm/min and 10 cm/min wherein the slit width 62.7w is below 2 mm and the ratio of open to closed cross sections is well below 2 %.

In a first embodiment the recycling vessel 10 has an interior volume of between 6 to 7 m³ and a height of the vessel 10 in the direction of the vertical axis Z is 2 m. The diameter of the vessel 10 and the plate 62.1 of the compression plate 62 is in between 2 m to 2,50 m.

In a varied embodiment the interior volume of the vessel 10 can be in between 10 to 12 m³ at a height of the vessel 10 of in between 3,5 m to 4,5 m, in particular at around 4,00 m. A diameter of the vessel 10 is preferably in between 2,5 m and 3,5 m, in particular at around 3,00 m.

Thus generally, the vessel is provided with an interior volume of in between 5 m³ to 15 m³ at a height of in between 1 m to 6 m at a diameter of in between 2 m to 4 m. In particular for the above assigned general dimensions of the vessel 10 the downward velocity and through flow orifices with a particular preferred combination for achieving a functioning passive filter means.

In step S205 the plate arrangement 60 is provided in the operating state 03 and the lid 12 thus opens the vessel 10 wherein the compressed cake of compressed solid material is served in the plane P --and thus on height of the tray 40 and the slide element 30 as has been described with Fig.1--. In step S206 the compressed cake can be moved to the tray 40 by means of the slide element 30 and the tray thereafter is activated thus to discharge the pressed cake into a container or the like volume.

The method 200 described can be cycled continuously. Thus after finishing step S206 the vessel again can be charged with bituminous material bodies for melting as has been described with step S201.

In particular the invention comprises one or more of the apparatus and method embodiments as listed below.
1. Apparatus for recycling bituminous material bodies by melting, in particular for recycling bituminous composite material bodies comprising a composite material and a bituminous material, in particular roofing materials, in particular in the form of bituminous covering layers of roofing sheets, the apparatus comprising:
   - a vessel having a vessel wall surrounding an interior space of the vessel extending along a vertical axis of the vessel for receiving the bituminous material bodies,
   - a bottom plate and a compression plate extending transverse to the vertical axis wherein at least the compression plate has a number of through flow orifices adapted to allow a through flow of molten bituminous material, wherein the plates are movable along the vertical axis such that
   - in a first operating state the compression plate is in a middle position for forming a melting space of larger size between the compression plate and the bottom plate for melting bituminous material in the melting space wherein the bottom plate is in a melting position,
   - in a second operating state the compression plate is in a lower position for forming a compression space of minor size between the compression plate and the bottom plate for compressing solid residues and/or solid composite material in the compression space, and wherein
      molten bituminous material is retained in a storing space above the compression plate for storing and/or discharging bituminous material, wherein the bottom plate is in a compression position, wherein
   - the compression plate is movable from the middle position to the lower position with a downward velocity below an upper limit, wherein
   the upper limit of the downward velocity and the through flow orifices are in a form adapted to - retain the composite material and/or other solid residues in a state of operation below the compression plate when moving the compression plate from the middle position to the lower position with the downward velocity such that a passive filter means below the compression plate is provided by means of the composite material and/or other solid residues.
2. Apparatus according to one of the preceding embodiments wherein the upper limit of the downward velocity is between 10 cm/min and 15cm/min.
3. Apparatus according to one of the preceding embodiments wherein the through flow orifices are in the form of slits having a lower slit width and an upper slit length.
4. Apparatus according to one of the preceding embodiments wherein the through flow orifices lower cross-sectional dimension, in particular lower width, in particular slit width, is below 10mm, in particular below 4mm, in particular below 2mm.
5. Apparatus according to one of the preceding embodiments wherein the ratio of a sum of open cross-sections of orifices to the total closed area of the compression plate is below 10%, in particular below 5%, in particular below 2%, in particular below 1 %.
6. Apparatus according to one of the preceding embodiments wherein the orifices have plan-parallel boundary surfaces.
7. Apparatus according to one of the preceding embodiments wherein a hydraulic and/or pneumatic drive is adapted to move at least the compression plate along the vertical axis from the middle position to the lower position with the downward velocity.
8. Apparatus according to one of the preceding embodiments wherein a drive is adapted to move at least the compression plate along the vertical axis by exerting pressure at least to a first number of drive rods adapted to move the compression plate between said positions.
9. Apparatus according to one of the preceding embodiments wherein a second number of guidance rods are adapted to establish a guidance link at least of the bottom plate to the compression plate wherein
   - a lower distance between the bottom plate and the compression plate is variable dependent on the position of the compression plate, and
   - an upper distance between the bottom plate and the compression plate is limited by a stop collar.
10. Apparatus according to one of the preceding embodiments wherein a drive rod extends to a first line of openings in said plates and a guidance rod extends to a second line of openings in said plates.
11. Apparatus according to one of the preceding embodiments wherein a first line of openings in said plates is located on an outer circumference line on a respective plate and a second line of openings in said plates is located on an inner circumference line on a respective plate.
12. Apparatus according to one of the preceding embodiments wherein the number of drive rods and the number of guidance rods and respective openings are the same, in particular the number amounts to three, in particular each rod is arranged along a first and second inner circumferential cylindrical shape.
13. Apparatus according to one of the preceding embodiments wherein further comprising a cover plate wherein the compression plate is arranged between the bottom plate and the cover plate.
14. Apparatus according to one of the preceding embodiments wherein when the bottom plate is in a melting position, the bottom plate in a lowermost region of the vessel wall along the vertical axis and the vessel is closed by the cover plate and the compression plate is in an upper region of the vessel wall along the vertical axis.
15. Apparatus according to one of the preceding embodiments wherein when the bottom plate is in a compression position, the bottom plate in a lowermost region of the vessel wall along the vertical axis and the vessel is closed by the cover plate and the compression plate is in a lower region of the vessel wall along the vertical axis.
16. Apparatus according to one of the preceding embodiments wherein when the bottom plate is in a discharge position, the vessel is open and the compression plate and the cover plate are in a region above the vessel wall along the vertical axis, in particular the bottom plate in the region above the vessel wall along the vertical axis.
17. Apparatus according to one of the preceding embodiments wherein the interior space is adapted for receiving the bituminous materials,
   wherein the vessel wall has
   an inner wall defining the interior space and adapted for contacting the bituminous materials, and
   an outer wall defining an annular space between the inner wall and the outer wall, which annular space is adapted to receive a heating liquid for heating the interior space, in particular the bituminous materials.
18. Apparatus according to one of the preceding embodiments wherein the inner wall and the out wall are connected at a plurality of hubs, in particular each hub is formed as pillow plated hub, in particular of a weld hub.
19. Apparatus according to one of the preceding embodiments wherein the interior space is adapted to be open to the surrounding, in particular an overflow channel is connectable in a flow connection to the interior space.
20. Apparatus according to one of the preceding embodiments wherein the interior space is adapted to be pressurized with a pressure below atmospheric pressure, in particular with a vacuum pressure.
21. Apparatus according to one of the preceding embodiments wherein further comprising a microwave heating arrangement adapted to heat the interior space, in particular the bituminous materials.
22. Apparatus according to one of the preceding embodiments wherein further comprising:
   a first and second flow pipe connected to the vessel in a flow connection to the interior space of the vessel wherein a propeller is adapted to circulate molten bituminous materials in the first and second flow pipe and the interior space of the vessel.
23. Apparatus according to one of the preceding embodiments wherein in a third operating state the compression plate is in an upper position for forming a discharge space between the compression plate and the bottom plate for discharging bituminous materials from the discharge space, wherein the bottom plate is in a discharge position
24. Apparatus according to one of the preceding embodiments wherein the discharge position of the bottom plate is adapted such that the bottom plate surface aligns with a slider element of a slide and/or a discharge receipt tray, wherein the slide is adapted to move the slider element along the surface of the bottom plate to move the compressed solid residues and/or composite material to the discharge receipt tray.
25. Apparatus according to one of the preceding embodiments wherein the discharge receipt tray is pivotable from a horizontal surface position to a vertical surface position to release the compressed solid residues and/or composite material.
26. Apparatus according to one of the preceding embodiments wherein a head frame is adapted for supporting the vessel and/or a slide and/or a tray wherein a vessel part of the a head frame comprises a number of columns extending a along an outer circumferential cylindrical shape, in particular wherein a column is basically aligned in a radial extending vertical tier with a guidance rod and a drive rod.
27. Method for recycling bituminous material bodies by melting, in particular for recycling solid bituminous composite material bodies comprising a composite material and a bituminous material, in particular roofing materials, in particular in the form of bituminous covering layers of roofing sheets, in particular using an apparatus as claimed in one or more of the preceding embodiments, comprising the steps of:
   - receiving the bituminous materials in an interior space of a vessel having a vessel wall surrounding the interior space of the vessel extending along a vertical axis of the vessel,
   - containing the bituminous materials above a bottom plate and allowing a through flow of molten bituminous materials through a compression plate extending transverse to the vertical axis wherein at least the compression plate has a number of through flow orifices adapted to allow the through flow of molten bituminous materials,
   - moving the plates along the vertical axis such that
   - in a first operating state the compression plate is in a middle position for forming a melting space of larger size between the compression plate and the bottom plate for melting bituminous materials in the melting space wherein the bottom plate is in a melting position,
   - in a second operating state the compression plate is in a lower position for forming a compression space of minor size between the compression plate and the bottom plate for compressing solid residues and/or composite material in the compression space, and wherein
      melted bituminous material is retained in a storing space above the compression plate for storing and/or discharging melted bituminous material, wherein the bottom plate is in a compression position, wherein
   - the compression plate is moved from the middle position to the lower position with a downward velocity below an upper limit, wherein
      the upper limit of the downward velocity and the through flow orifices are in a form adapted to retain composite material in a state of operation below the compression plate when moving the compression plate from the middle position to the lower position with the downward velocity such that a passive filter means below the compression plate is provided by means of the composite material and/or other solid residues.
28. Method according to one of the preceding embodiments wherein the upper limit of the downward velocity is between 10 cm/min and 15cm/min.
29. Method according to one of the preceding embodiments wherein moving the plates along the vertical axis is further such that
   in a third operating state the compression plate is in an upper position for forming a discharge space between the compression plate and the bottom plate for discharging bituminous materials from the discharge space, wherein the bottom plate is in a discharge position
30. Method according to one of the preceding embodiments wherein when moving the compression plate from the middle position to the lower position with the downward velocity composite material and/or solid residues are retained below the compression plate.
31. Method according to one of the preceding embodiments wherein composite material and/or solid residues are retained such that the bituminous material of a through flow of the bituminous material through the orifices is filtered, in particular to provide clean primary bituminous material.
32. Method according to one of the preceding embodiments wherein non-melting additives, in particular polyester- and/or glass- fleece- and/or -fabric or mineral filler materials as additives, are added to the bituminous materials to improve filtering of the bituminous material.
33. Method according to one of the preceding embodiments wherein non-melting additives are added to the bituminous materials in a concentration corresponding to an amount of up to 50m2 to 100m2 per volume of bituminous materials of up to 6 m3 to 11 m3.
34. Method according to one of the preceding embodiments wherein the bituminous materials comprise a polymer-modified bitumen compound, in particular wherein the polymer-modified bitumen compound forms a major part of the recycled bituminous material.
35. Method according to one of the preceding embodiments wherein the bituminous material bodies comprise filler material residues, in particular inlaids (such as polyester-or glass-fleece or -fabric or mineral filler materials) or unwanted residues (such as slate chippings) wherein the filler materials form a minor part of the bituminous material bodies.
36. Method according to one of the preceding embodiments wherein the bituminous material is heated by a heating liquid, in particular a heating liquid circulated in the annular space, and/or heated by a microwave energy.
37. Method according to one of the preceding embodiments wherein the compression plate is hydraulically and/or pneumatically moved.
38. Method according to one of the preceding embodiments wherein the compression plate and/or the bottom plate are guided and/or are driven by a number of rods.
39. Method according to one of the preceding embodiments wherein compressed solid composite material and/or solid residues are shifted from the bottom plate to a pivotable discharge receipt tray at a discharge position of the bottom plate.

## Claims

1. Apparatus for recycling bituminous material bodies by melting, in particular for recycling bituminous composite material bodies comprising a composite material and a bituminous material, in particular roofing materials, in particular in the form of bituminous covering layers of roofing sheets, the apparatus comprising:
- a vessel having a vessel wall surrounding an interior space of the vessel extending along a vertical axis of the vessel for receiving the bituminous material bodies,
- a bottom plate and a compression plate extending transverse to the vertical axis wherein at least the compression plate has a number of through flow orifices adapted to allow a through flow of molten bituminous material, wherein the plates are movable along the vertical axis such that
- in a first operating state the compression plate is in a middle position for forming a melting space of larger size between the compression plate and the bottom plate for melting bituminous material in the melting space wherein the bottom plate is in a melting position,
- in a second operating state the compression plate is in a lower position for forming a compression space of minor size between the compression plate and the bottom plate for compressing solid residues and/or solid composite material in the compression space, and wherein
molten bituminous material is retained in a storing space above the compression plate for storing and/or discharging bituminous material, wherein the bottom plate is in a compression position, wherein
- the compression plate is movable from the middle position to the lower position with a downward velocity below an upper limit, wherein
the upper limit of the downward velocity and the through flow orifices are in a form adapted to
- retain the composite material and/or other solid residues below the compression plate in a state of operation when moving the compression plate from the middle position to the lower position with the downward velocity, such that
- a passive filter means below the compression plate is provided by means of the composite material and/or other solid residues.

2. Apparatus according to one of the preceding claims wherein the upper limit of the downward velocity is between 10 cm/min and 15cm/min and the downward velocity is above 0 cm/min.

3. Apparatus according to one of the preceding claims wherein
- the through flow orifices are in the form of slits having a lower slit width and an upper slit length, and/or
- the orifices have plan-parallel boundary surfaces.

4. Apparatus according to one of the preceding claims wherein the through flow orifices lower cross-sectional dimension, in particular lower width, in particular slit width, is below 10mm, in particular below 4mm, in particular below 2mm.

5. Apparatus according to one of the preceding claims wherein the ratio of a sum of open cross-sections of orifices to the total closed area of the compression plate is below 10%, in particular below 5%, in particular below 2%, in particular below 1%, in particular between 0.001% and 2%.

6. Apparatus according to one of the preceding claims wherein a hydraulic and/or pneumatic drive is adapted to move at least the compression plate along the vertical axis from the middle position to the lower position with the downward velocity and wherein the drive is adapted to move at least the compression plate along the vertical axis by exerting pressure at least to a first number of drive rods adapted to move the compression plate between said positions.

7. Apparatus according to one of the preceding claims wherein a second number of guidance rods are adapted to establish a guidance link at least of the bottom plate to the compression plate wherein
- a lower distance between the bottom plate and the compression plate is variable dependent on the position of the compression plate, and
- an upper distance between the bottom plate and the compression plate is limited by a stop collar of the drive and/or guidance rods.

8. Apparatus according to one of the preceding claims wherein a drive rod extends to a first line of openings in said plates and a guidance rod extends to a second line of openings in said plates, wherein
- a first line of openings in said plates is located on an outer circumference line on a respective plate and a second line of openings in said plates is located on an inner circumference line on a respective plate.

9. Apparatus according to one of the preceding claims wherein the number of drive rods and the number of guidance rods and respective openings are the same, in particular the number amounts to three, in particular each rod is arranged along a first and second inner circumferential cylindrical shape.

10. Apparatus according to one of the preceding claims wherein further comprising a cover plate wherein the compression plate is arranged between the bottom plate and the cover plate, and wherein
- when the bottom plate is in a melting position, the bottom plate in a lowermost region of the vessel wall along the vertical axis and the vessel is closed by the cover plate and the compression plate is in an upper region of the vessel wall along the vertical axis, and/or
- when the bottom plate is in a compression position, the bottom plate in a lowermost region of the vessel wall along the vertical axis and the vessel is closed by the cover plate and the compression plate is in a lower region of the vessel wall along the vertical axis, and/or
- when the bottom plate is in a discharge position, the vessel is open and the compression plate and the cover plate are in a region above the vessel wall along the vertical axis, in particular the bottom plate in the region above the vessel wall along the vertical axis.

11. Apparatus according to one of the preceding claims wherein the interior space is adapted for receiving the bituminous materials, wherein the vessel wall has an inner wall defining the interior space and adapted for contacting the bituminous materials, and
- an outer wall defining an annular space between the inner wall and the outer wall, which annular space is adapted to receive a heating liquid for heating the interior space, in particular the bituminous materials, and/or
- the vessel comprising a microwave heating arrangement adapted to heat the interior space, in particular the bituminous materials.

12. Apparatus according to one of the preceding claims wherein the inner wall and the outer wall are connected at a plurality of hubs, in particular each hub is formed as pillow plated hub, in particular in form of a weld hub.

13. Apparatus according to one of the preceding claims, further comprising a sealable venting means, like in particular a pressurizable valve or the like, wherein
- the interior space is adapted to be open to the surrounding, in particular an overflow channel is connectable in a flow connection to the interior space, and/or
- the interior space is adapted to be pressurized with a pressure below atmospheric pressure, in particular with a vacuum pressure.

14. Apparatus according to one of the preceding claims wherein further comprising: a first and second flow pipe connected to the vessel in a flow connection to the interior space of the vessel wherein a propeller is adapted to circulate molten bituminous materials in the first and second flow pipe and the interior space of the vessel.

15. Apparatus according to one of the preceding claims wherein
- in a third operating state the compression plate is in an upper position for forming a discharge space between the compression plate and the bottom plate for discharging bituminous materials from the discharge space, wherein the bottom plate is in a discharge position, and/or
- the discharge position of the bottom plate is adapted such that the bottom plate surface aligns with a slider element of a slide and/or a discharge receipt tray, wherein the slide is adapted to move the slider element along the surface of the bottom plate to move the compressed solid residues and/or composite material to the discharge receipt tray.

16. Apparatus according to one of the preceding claims wherein the discharge receipt tray, is heatable and/or pivotable, in particular from a horizontal surface position to a vertical surface position to release the compressed solid residues and/or composite material.

17. Apparatus according to one of the preceding claims wherein a head frame is adapted for supporting the vessel and/or a slide and/or a tray wherein a vessel part of the a head frame comprises a number of columns extending a along an outer circumferential cylindrical shape, in particular wherein a column is basically aligned in a radial extending vertical tier with a guidance rod and a drive rod.

18. Method for recycling bituminous material bodies by melting, in particular for recycling solid bituminous composite material bodies comprising a composite material and a bituminous material, in particular roofing materials, in particular in the form of bituminous covering layers of roofing sheets, in particular using an apparatus as claimed in one or more of the preceding claims, comprising the steps of:
- receiving the bituminous materials in an interior space of a vessel having a vessel wall surrounding the interior space of the vessel extending along a vertical axis of the vessel,
- containing the bituminous materials above a bottom plate and allowing a through flow of molten bituminous materials through a compression plate extending transverse to the vertical axis wherein at least the compression plate has a number of through flow orifices adapted to allow the through flow of molten bituminous materials,
- moving the plates along the vertical axis such that
- in a first operating state the compression plate is in a middle position for forming a melting space of larger size between the compression plate and the bottom plate for melting bituminous materials in the melting space wherein the bottom plate is in a melting position,
- in a second operating state the compression plate is in a lower position for forming a compression space of minor size between the compression plate and the bottom plate for compressing solid residues and/or composite material in the compression space, and wherein
melted bituminous material is retained in a storing space above the compression plate for storing and/or discharging melted bituminous material, wherein the bottom plate is in a compression position, wherein
- the compression plate is moved from the middle position to the lower position with a downward velocity below an upper limit, wherein
the upper limit of the downward velocity and the through flow orifices are in a form adapted to retain composite material in a state of operation below the compression plate when moving the compression plate from the middle position to the lower position with the downward velocity such that a passive filter means below the compression plate is provided by means of the composite material and/or other solid residues.
